# EUROPEAN PATENT APPLICATION

(11) **EP 4 617 856 A1**
(43) Date of publication of application: **17.09.2025**
(21) Application number: 25162736.0
(22) Date of filing: 10.03.2025
(51) Int. Cl.: G06F 8/41, G06T 15/04, G06F 9/50

(54) **REGISTER ALLOCATION**

(30) Priority: 13.03.2024 GB 202403620
(71) Applicant: Imagination Technologies Limited, Kings Langley, Hertfordshire WD4 8LZ (GB)
(72) Inventor: Neyman, Aleksander, Hertfordshire, WD4 8LZ (GB)
(74) Representative: Elkington and Fife LLP

(57) **Abstract**

Shader programs may include conditional portions, executed only in response to a specific condition being met. The use of conditional portions can require different numbers of registers. Thus, the use of conditional portions potentially results in the over-allocation of registers. Accordingly, there is provided a method of rendering in a graphics processing system using a shader program having a conditional section applied only in response to fulfilment of a condition, the method comprising compiling the program, by a compiler, the compiling comprising identifying a conditional section reading, by a resource allocator, a constant which determines the result of the condition, determining, by the resource allocator, whether the condition is met or not met and allocating, by the resource allocator, a number of registers.

## Description

This application claims priority from UK patent application 2403620.4 filed on 13 March 2024.

### TECHNICAL FIELD

The present disclosure relates to graphics processing systems, in particular those implementing shading programs with conditional sections.

### BACKGROUND

Graphics processing systems are typically configured to receive graphics data, e.g. from an application running on a computer system, and to render the graphics data to provide a rendering output. For example, the graphics data provided to a graphics processing system may describe geometry within a three dimensional (3D) scene to be rendered, and the rendering output may be a rendered image of the scene. Some graphics processing systems (which may be referred to as "tile-based" graphics processing systems) use a rendering space which is subdivided into a plurality of tiles. The "tiles" are sections of the rendering space, and may have any suitable shape, but are typically rectangular (where the term "rectangular" includes square). As is known in the art, there are many benefits to subdividing the rendering space into tile sections. For example, subdividing the rendering space into tile sections allows an image to be rendered in a tile-by-tile manner, wherein graphics data for a tile can be temporarily stored "on-chip" during the rendering of the tile, thereby reducing the amount of data transferred between a system memory and a chip on which a graphics processing unit (GPU) of the graphics processing system is implemented.

Tile-based graphics processing systems typically operate in two phases: a geometry processing phase and a rendering phase. In the geometry processing phase, the graphics data for a render is analysed to determine, for each of the tiles, which graphics data items are present within that tile. The graphics data items may include geometric primitives such as triangles. Then in the rendering phase (e.g. a rasterisation phase), a particular tile can be rendered by processing those graphics data items which are determined to be present within that tile (without needing to process graphics data items which were determined in the geometry processing phase to not be present within the particular tile).

When rendering an image by rasterisation, graphics data items are sampled to determine coverage, e.g., to determine which pixels of a tile are covered by a triangular primitive. A fragment may be generated for each sample position, and fragments are shaded (using shader programs, which may also be termed 'shaders' or 'shading programs') to determine the colours of the pixels of the image. Graphics shader programs may also be used at other stages in the graphics pipeline (e.g. vertex shaders, geometry shaders or tessellation shaders), or may be used in other types of graphics rendering (such as ray tracing shaders), and other types of shader programs (such as compute shaders) may be used to perform other types of task on a GPU. Such shader programs may produce a direct output (such as a shaded fragment), but may also produce outputs more indirectly (such as by calling other shader programs).

Shader programs are becoming increasingly complex and include optional portions. As an example, a particular portion of the code may be used to apply a particular technique which may not be used in every time the shader is executed. A conditional statement, accessing a constant stored in a memory, is used to determine whether a particular portion of code is used for a particular task using that shader program.

Shaders use multiple registers and the optional parts of the shader will require registers. However, for some shader executions the optional sections will not be used. Therefore the registers allocated to those sections are unused and allocated unnecessarily. This unnecessary allocation can impact rendering performance, if it means there are not enough free registers to allocate to other shader programs that would otherwise be able to run.

One solution to this is to compile the shader programs a plurality of times, each with a different combination of conditional statements fulfilled. Once the constant(s) determining which conditional statements will be required for a particular shading task using the shader program are known, the correctly compiled version of the program can be accessed. This mitigates the unnecessary allocation of registers. However, as the number of different conditional statements (and associated conditional portions) increases the number of compiled programs increases exponentially which in turn becomes cumbersome.

There is therefore a need to provide a method of executing shader programs with conditional portions without overallocating registers and without generating, and storing, an unnecessary number of compiled shader programs.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Within a graphical processing system a plurality of different shading programs may be executed by a single processor over multiple threads. In some shading programs there may be one or more conditional portions of the program which are executed (or not) on the basis of conditional statements. The conditional portions require corresponding registers and if the conditional portions are not used the registers are therefore also not used. This uses registers unnecessarily. However, there are a limited number of registers available and therefore efficient allocation of the registers optimises performance. The present invention provides a method of preventing the overallocation of registers in respect of unused conditional portions of shading programs.

According to a first aspect there is provided a method of executing a shader program in a graphics processing system, the shader program having a conditional section applied only in response to fulfilment of a condition, the method comprising:
compiling the program, by a compiler, the compiling comprising identifying a conditional section;
reading, by a resource allocator, a constant which determines the result of the condition;
determining, by the resource allocator, whether the condition is met or not met;
allocating, by the resource allocator, a number of registers.

In some embodiments the shader program may render a scene and therefore the method is a method of rendering using a shader program.

Optionally, the method further comprises executing, by a processor, the shader program. The processor may optionally be a single instruction multiple data (SIMD) processor such as a universal shader.

Optionally, the method further comprises storing, by the resource allocator, the constant in one of the allocated registers.

Optionally, the method further comprises:
reading, by a processor, the constant stored in the register;
determining, by the processor whether the condition is met;
responsive to the determination executing the conditional section or not executing the conditional section.

Optionally, the method further comprises transmitting, by the compiler to the resource allocator, the first number of registers, the second number of registers and the condition.

Optionally, allocating comprises either allocating a first number of registers or a second number of registers according to whether it is determined the condition is met or not met.

Optionally, the method further comprises defining, by the compiler, a first number of registers to be allocated if the condition is met and a second number of registers to be allocated if the condition is not met and wherein allocating comprises allocating either the first number of registers or the second number of registers.

Optionally, the shader program has a plurality of conditional sections, each section being applied only in response to fulfilment of a condition and wherein:
compiling comprises identifying the plurality of conditional sections;
   defining comprises defining a plurality of number of registers, a different number of registers for each combination of conditions fulfilled;
reading comprises reading the plurality of constants on which the conditions are based;
determining comprises determining whether each of the plurality of conditions is met or not met; and
allocating comprising allocating one of the plurality of number of registers based on the determination.

According to a second aspect of the invention there is provided a graphics processing system configured to execute a shader program, wherein the graphics processing system comprises logic configured to:
compile, by a compiler, the program comprising identifying a conditional section;
read, by a resource allocator, a constant which determines the result of the condition;
determine, by the resource allocator, whether the conditional statement is met or not met;
allocate, by the resource allocator, based on the determination, a number of registers.

In some embodiments the shader program renders a scene.

Optionally, the logic is further configured to execute the shader program. The logic may comprise a single instruction multiple data processor.

Optionally, the logic is further configured to store the constant in one of the allocated registers.

Optionally, the logic is further configured to:
read, by a processor, the constant stored in the register;
determine, by the processor whether the condition is met; and
responsive to the determination execute the conditional section or not executing the conditional section.

Optionally, the logic is further configured to transmit, by the compiler to the resource allocator, the first number of registers, the second number of registers and the condition.

Optionally, allocating comprises either allocating a first number of registers or a second number of registers according to whether it is determined the condition is met or not met.

Optionally, the logic is further configured to define, by the compiler, a first number of registers to be allocated if the condition is met and a second number of registers to be allocated if the condition is not met and wherein allocating comprises allocating either the first number of registers or the second number of registers.

Optionally, the shader program has a plurality of conditional sections, each section being applied only in response to fulfilment of a condition, wherein:
compiling comprises identifying the plurality of conditional sections;
   defining comprises defining a plurality of number of registers, a different number of registers for each combination of conditions fulfilled;
reading comprises reading the plurality of constants on which the conditions are based;
determining comprises determining whether each of the plurality of conditions is met or not met; and
allocating comprising allocating one of the plurality of number of registers based on the determination

According to a third aspect there may be provided a graphics processing system configured to perform the method of the first aspect or any of the aforementioned variations.

The graphics processing system may be embodied in hardware on an integrated circuit. There may be provided a method of manufacturing, at an integrated circuit manufacturing system, a graphics processing system. There may be provided an integrated circuit definition dataset that, when processed in an integrated circuit manufacturing system, configures the system to manufacture a graphics processing system. There may be provided a non-transitory computer readable storage medium having stored thereon a computer readable description of a graphics processing system that, when processed in an integrated circuit manufacturing system, causes the integrated circuit manufacturing system to manufacture an integrated circuit embodying a graphics processing system.

There may be provided an integrated circuit manufacturing system comprising: a non-transitory computer readable storage medium having stored thereon a computer readable description of the graphics processing system; a layout processing system configured to process the computer readable description so as to generate a circuit layout description of an integrated circuit embodying the graphics processing system; and an integrated circuit generation system configured to manufacture the graphics processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a graphics processing system;
Figure 2 shows a method that can be implemented by a graphics processing system such as that of Fig. 1;
Figure 3 depicts a method according to the invention;
Figure 4 depicts an alternative method according to the invention;
Figure 5 depicts a method according to the invention for a shader program having a plurality of conditional sections;
Figure 6 shows a computer system in which a graphics processing system is implemented; and
Figure 7 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

The use of conditional portions within shader programs, as mentioned above, gives greater flexibility in the range of applications of a particular shader program. Consequently a shader program may have many different conditional portions, and can sometimes have conditional portions nested within conditional portions. A conditional portion is executed on the basis of a constant associated with a task calling the shader. The following description considers fragment shader programs in particular, but it will be understood that this is by way of example and that other types of shader program may also contain conditional portions and that the approaches described herein may also be applied to those other types of shader programs.

A shading program is compiled by a compiler, generally in a CPU outside a GPU. The compilation time is significant and compilation is therefore completed in advance. In particular, the compilation is begun before any constants, on which any conditional statements are based, are known. The compilation includes defining the number of registers used by the program.

In one approach, the constants are not known at the time of compilation so current systems compile the program and a resource allocator then allocates registers on the basis of all conditional portions being executed i.e. registers are allocated for all conditional portions. However, if a task calling the shader does not execute all (or any) of the conditional portions there may be many redundant registers.

There are a finite number of registers available and therefore allocating registers which may be unused unnecessarily occupies registers. To optimise efficiency the shading unit completes multiple interleaved threads. Thus, the finite number of registers may limit the number of tasks and result in inefficiency of the shading unit.

As mentioned above, an alternative possibility would be to compile different programs for different versions of the program with different conditional portions. However, this may require a large number of compiled programs which may become cumbersome and require large computational resources to compile.

Another alternative possibility would be to wait to compile the shading program until the constant(s) which dictate whether to execute the conditional portion(s) is/are known. However, compiling the program is a relatively lengthy process so waiting until the constants are known would significantly slow the overall process.

A further alternative is to allocate registers only when needed. However, the disadvantage of this is that the storage is not optimized.

The present disclosure presents a way in which the number of registers can be correctly allocated without the impeding or slowing the overall process.

Embodiments will now be described by way of example only.

### General System

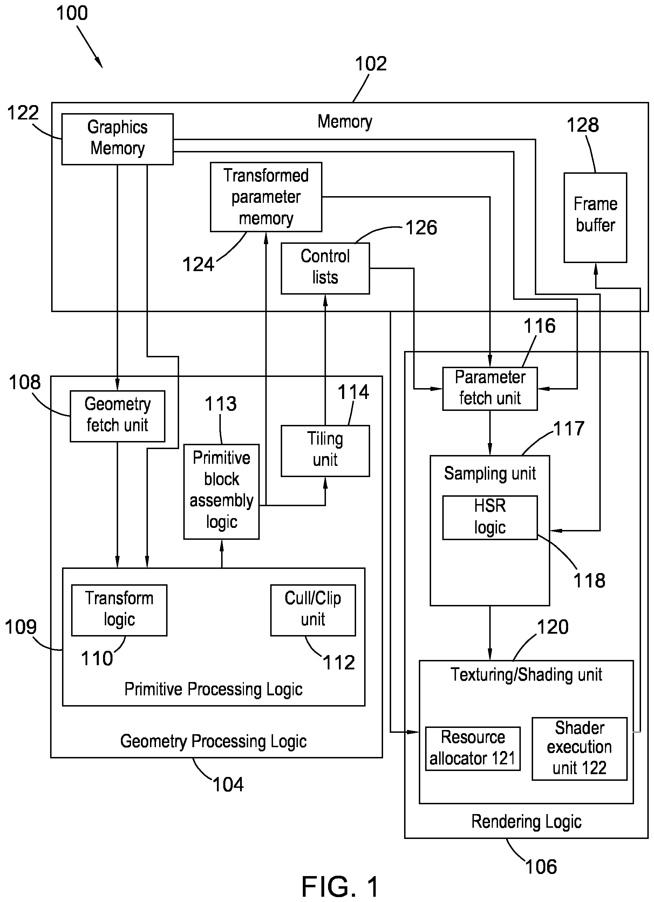

Fig. 1 shows an example graphics processing system 100. The example graphics processing system 100 is a tile-based graphics processing system. As mentioned above, a tile-based graphics processing system uses a rendering space which is subdivided into a plurality of tiles. The tiles are sections of the rendering space, and may have any suitable shape, but are typically rectangular (where the term "rectangular" includes square). The tile sections within a rendering space are conventionally the same shape and size.

The system 100 comprises a memory 102, geometry processing logic 104 and rendering logic 106. The geometry processing logic 104 and the rendering logic 106 may be implemented on a GPU and may share some processing resources, as is known in the art. The geometry processing logic 104 comprises a geometry fetch unit 108; primitive processing logic 109, which in turn comprises geometry transform logic 110 and a cull/clip unit 112; primitive block assembly logic 113; and a tiling unit 114. The rendering logic 106 comprises a parameter fetch unit 116; a sampling unit 117 comprising hidden surface removal (HSR) logic 118; and a texturing/shading unit 120. The example system 100 is a so-called "deferred rendering" system, because the texturing/shading is performed after the hidden surface removal. However, a tile-based system does not need to be a deferred rendering system, and although the present disclosure uses a tile-based deferred rendering system as an example, the ideas presented are also applicable to non-deferred (known as immediate mode) rendering systems or non-tile-based systems. The memory 102 may be implemented as one or more physical blocks of memory and includes a graphics memory 122; a transformed parameter memory 124; a control lists memory 126; and a frame buffer 128.

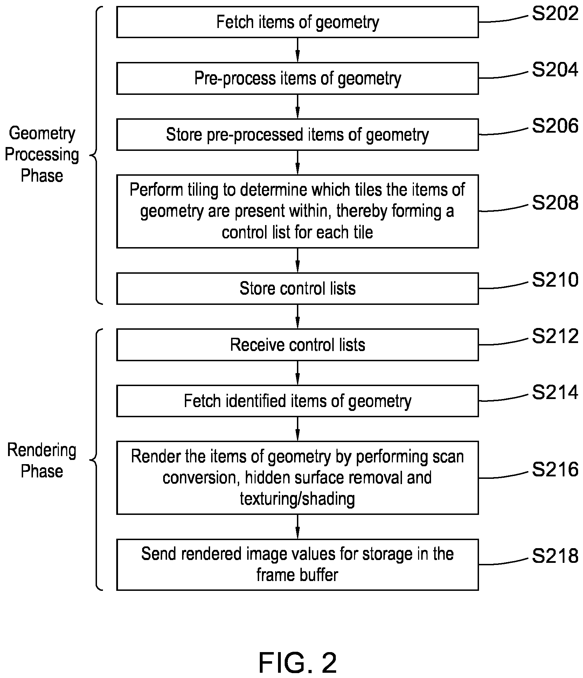

Fig. 2 shows a flow chart for a method of operating a tile-based rendering system, such as the system shown in Fig. 1. The geometry processing logic 104 performs the geometry processing phase, in which the geometry fetch unit 108 fetches geometry data (e.g. previously received from an application for which the rendering is being performed) from the graphics memory 122 (in step S202) and passes the fetched data to the primitive processing logic 109. The geometry data comprises graphics data items (i.e. items of geometry) which describe geometry to be rendered. For example, the items of geometry may represent geometric shapes, which describe surfaces of structures in the scene. The items of geometry may be in the form of primitives (commonly triangles, but primitives may be other 2D shapes and may also be lines or points to which a texture can be applied). Primitives can be defined by their vertices, and vertex data can be provided describing the vertices, wherein a combination of vertices describes a primitive (e.g. a triangular primitive is defined by vertex data for three vertices). Objects can be composed of one or more such primitives. In some examples, objects can be composed of many thousands, or even millions of such primitives. Scenes typically contain many objects. Items of geometry can also be meshes (formed from a plurality of primitives, such as quads which comprise two triangular primitives which share one edge). Items of geometry may also be patches, wherein a patch is described by control points, and wherein a patch is tessellated to generate a plurality of tessellated primitives.

In step S204 the geometry processing logic 104 pre-processes the items of geometry, e.g. by transforming the items of geometry into screen space, performing vertex shading, performing geometry shading and/or performing tessellation, as appropriate for the respective items of geometry. In particular, the primitive processing logic 109 (and its sub-units) may operate on the items of geometry, and in doing so may make use of state information retrieved from the graphics memory 122. For example, the transform logic 110 in the primitive processing logic 109 may transform the items of geometry into the rendering space and may apply lighting/attribute processing as is known in the art. The resulting data may be passed to the cull/clip unit 112 which may cull and/or clip any geometry which falls outside of a viewing frustum. The remaining transformed items of geometry (e.g. primitives) are provided from the primitive processing logic 109 to the primitive block assembly logic 113 which groups the items of geometry into blocks, also be referred to as "primitive blocks", for storage. A primitive block is a data structure in which data associated with one or more primitives (e.g. the transformed geometry data related thereto) are stored together. For example, each block may comprise up to N primitives, and up to M vertices, where the values of N and M are an implementation design choice. For example, N might be 24 and M might be 16. Each block can be associated with a block ID such that the blocks can be identified and referenced easily. Primitives often share vertices with other primitives, so storing the vertices for primitives in blocks allows the vertex data to be stored once in the block, wherein multiple primitives in the primitive block can reference the same vertex data in the block. In step S206 the primitive blocks with the transformed geometric data items are provided to the memory 102 for storage in the transformed parameter memory 124. The transformed items of geometry and information regarding how they are packed into the primitive blocks are also provided to the tiling unit 114. In step S208, the tiling unit 114 generates control stream data for each of the tiles of the rendering space, wherein the control stream data for a tile includes a control list of identifiers of transformed primitives which are to be used for rendering the tile, i.e. a list of identifiers of transformed primitives which are positioned at least partially within the tile. The collection of control lists of identifiers of transformed primitives for individual tiles may be referred to as a "control stream list" or "display list". In step S210, the control stream data for the tiles is provided to the memory 102 for storage in the control lists memory 126. Therefore, following the geometry processing phase (i.e. after step S210), the transformed primitives to be rendered are stored in the transformed parameter memory 124 and the control stream data indicating which of the transformed primitives are present in each of the tiles is stored in the control lists memory 126. In other words, for given items of geometry, the geometry processing phase is completed and the results of that phase are stored in memory before the rendering phase begins.

In the rendering phase, the rendering logic 106 renders the items of geometry (primitives) in a tile-by-tile manner. In step S212, the parameter fetch unit 116 receives the control stream data for a tile, and in step S214 the parameter fetch unit 116 fetches the indicated transformed primitives from the transformed parameter memory 124, as indicated by the control stream data for the tile. In step S216 the rendering logic 106 renders the fetched primitives by performing sampling on the primitives to determine primitive fragments which represent the primitives at discrete sample points within the tile, and then performing hidden surface removal and texturing/shading on the primitive fragments. In particular, the fetched transformed primitives are provided to the sampling unit 117 (which may also access state information, either from the graphics memory, or stored with the transformed primitives), which performs sampling and determines the primitive fragments to be shaded. As part of determining the primitive fragments to be shaded, the sampling unit 117 uses hidden surface removal (HSR) logic 118 to remove primitive fragments which are hidden (e.g. hidden by other primitive samples). Methods of performing sampling and hidden surface removal are known in the art. The term "sampling" is used herein to describe the process of generating discrete fragments from items of geometry (e.g. primitives), but this process can sometimes be referred to as "rasterisation" or "scan conversion". As mentioned above, the system 100 of Fig. 1 is a deferred rendering system, and so the hidden surface removal is performed before the texturing/shading. However, other systems may render fragments before performing hidden surface removal to determine which fragments are visible in the scene.

Fragments which are not removed by the HSR logic 118 are provided from the sampling unit 117 to the texturing/shading unit 120, where texturing and/or shading is applied. The texturing/shading unit 120 is typically configured to efficiently process multiple fragments in parallel. This can be done by determining individual fragments that require the same processing (e.g. need to run the same shader) and treating them as instances of the same task, which are then run in parallel, in a SIMD (single instruction, multiple data) processor for example. To assist with this, in some implementations, fragments from the same primitive may be provided to the texturing/shading unit 120 in so-called 'microtiles', being groups of fragments. A microtile may correspond to, for example, a 4x4 array of sample points corresponding to a particular area of the render space, and thus may include up to 16 fragments (depending on the primitive coverage within the microtile), and thus up to 16 task instances, if each fragment is shaded individually. It will be understood that these microtiles are separate to the 'tiles' used in tile-based rendering. As explained above, a tile is a sub-division of the overall render space for which the graphics data can be temporarily stored "on-chip" during the rendering of the tile. A microtile represents the sampling (and optionally hidden surface removal) result of part or all of a particular primitive. In other words, several microtiles may represent a single primitive, and many primitives may be present in a single tile.

Although it is not shown in Fig. 1, the texturing/shading unit 120 may receive texture data and/or constants relating to the shading from the memory 102 in order to apply texturing to the primitive fragments, as is known in the art. The texture data and/or constants may be stored and accessed by the texturing/shading unit (or a related resource allocator) when necessary. The texturing/shading unit 120 may apply further processing to the primitive fragments (e.g. alpha blending and other processes), as is known in the art in order to determine rendered pixel values of an image. The rendering phase is performed for each of the tiles, such that a whole image can be rendered with pixel values for the whole image being determined. In step S218, the rendered pixel values are provided to the memory 102 for storage in the frame buffer 128. The rendered image can then be used in any suitable manner, e.g. displayed on a display, or stored in memory or transmitted to another device, etc.

The texturing/shading unit 120 may comprise a resource allocator 121 and a shader execution unit 122. The resource allocator allocates resources used when the shader execution unit executes a program. The shader execution unit 122 may be a programmable processor. In many examples this is a single instruction multiple data (SIMD) processor so that the same instructions can be carried out on, for example, multiple fragments which use the same constant and texturing data. The specific programmable processor is often a multi-task processor which carries out, and switches between, multiple tasks. The use of multiple tasks enables resources of the texturing/shading unit 120 to be optimised and optimises utilisation. The resource allocator 121 and the shader execution unit 122 may be tightly integrated, such that the overall texturing/shading unit 120 may be considered to be a processor that handles its own resource allocation and runs the shader programs. Alternatively, the resource allocator 121 and shader execution unit 122 may be more separate within the overall texturing/shading unit 120, such that the overall texturing/shading unit 120 may be considered to comprise a processor in the form of the shader execution unit 122, as well as the resource allocator 121.

A large number of different programs may be executed by the shader execution unit 122 and, prior to a program being executed by the shader execution unit 122 the resources must be allocated to the program. In particular, registers must be allocated to the program. There are a limited number of registers available for the texturing/shading unit 120 and if the registers are all allocated then number of concurrent tasks may be limited and redundancy of the universal shader may occur.

For any given application there are a plurality of shading programs and different shading programs operate, for example, to shade different surfaces. When a particular shading program is identified it is compiled. As compiling is a resource intensive task this often occurs on a separate CPU but it can also occur on the GPU. As described above, the compiling of the program can take a significant time and so compilation of programs is usually commenced as soon as the shader program is identified.. In particular, compiling is time consuming and is therefore commenced soon after the shading program is identified.

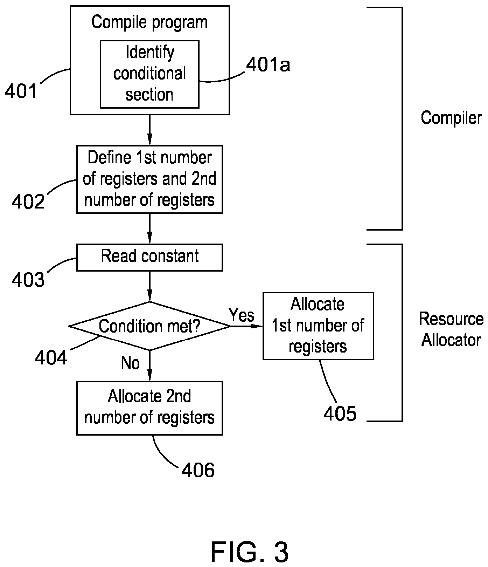

Figure 3 depicts a method of the invention in which a shader program with a conditional statement is prepared for execution. The selected shader program is identified and transmitted to the compiler. At step 401 the compiler compiles the shader program. According to the invention, as part of the compilation the compiler identifies a conditional section at step 401a. If the conditional section is executed in response to a condition being met then a first number of registers will be required for the shader program. However, if the conditional section is not executed because the condition is not met then only a second number of registers is required. As will be appreciated, the first number of registers is generally greater than the second number of registers. The condition comprises, for example, comparing a constant to a predefined value. The constant is determined in the earlier processing of the primitive data and may be stored in memory and/or passed to the texturing/shading unit 120.

At step 402 the compiler defines the first number of registers and the second number of registers. This information is transmitted to the resource allocator 121. Details of the condition may also be transmitted by the compiler to the resource allocator. As described above, the compilation is generally time consuming so performed in advance to avoid adversely affecting the speed of the process. A constant, indicating whether the conditional section is to be executed is stored in a memory, for example memory 102 or specifically transformed parameter memory 124. The resource allocator reads the constant at step 403, as part of preparing a shading task for execution. The resource allocator determines whether the condition is met at step 404. The constant may be a value and the condition may involve a comparison of the value to a predetermined threshold value (e.g. to determine if the value is above, below, or equal to the threshold value) or the condition may be binary.

If the condition is met the resource allocator allocates the first number of registers at step 405. If the condition is not met the resource allocator allocates the second number of registers.

Advantageously, the resource allocation is a speedy process that can be executed shortly before the shader program is executed. Thus, the correct number of registers are allocated without impeding the overall rendering.

Once the registers have been allocated to the task, shader execution unit 122 may execute the shader program and use the registers allocated by the resource allocator in steps 405 or 406. The shader execution unit 122 will execute the shader program and, when it encounters the conditional statement, it will read the constant from memory 102 to determine which execution path to take. Since the resource allocator 121 allocated the number of registers for the task based on reading the same constant, the texturing/shading unit 120 will have sufficient registers for the particular execution path dictated by the value of the constant.

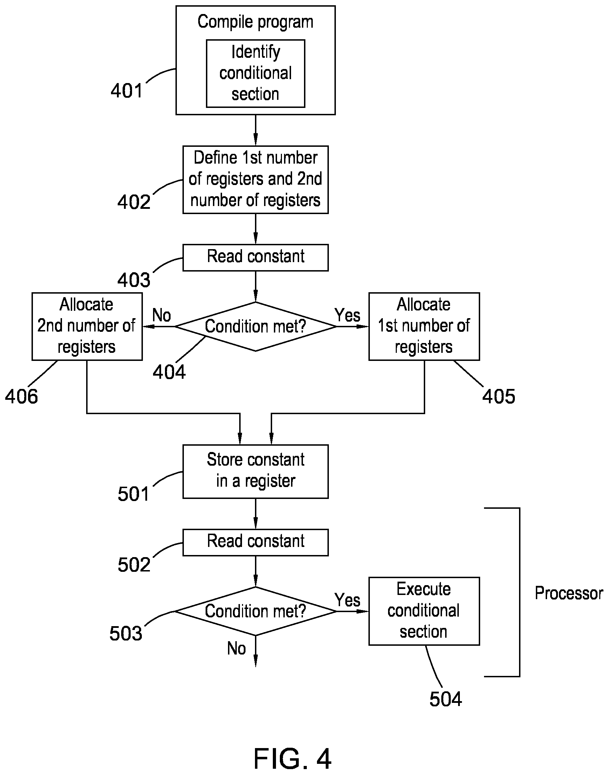

Figure 4 depicts an alternative method of the invention. Steps 401, 402, 403, 404, 405 and 406 are the same as those depicted in figure 3. However, at step 501, once the resource allocator has allocated the registers in either step 405 or 406 the constant (read at step 403) is stored in one of the allocated registers. This allows the shader execution unit 122, when executing the shader program, to read the constant without accessing external memory which can be resource and time consuming.

Then, when the shader execution unit 122 is executing the shader program the constant is read from the allocated register at step 502. From the constant the shader execution unit 122 then determines whether the condition is met at step 503. If the condition is met then the conditional section is executed at step 504. If the condition is not met then the conditional section is not executed.

Figures 3 and 4 describe handling a shader with a single conditional section, for ease of understanding. However, a shader program may have many conditional sections. Where there are a plurality of conditional sections there is a similar process for each condition. Furthermore, there may be nested conditions such that some conditions are only considered if earlier conditions are fulfilled. An example of additional registers is given in Table 1, in which condition 3.2 is nested within condition 3.1 and only evaluated if condition 3.1 is fulfilled:

| Conditional section | Number of additional registers |
|---|---|
| 1 | 2 |
| 2 | 8 |
| 3.1 | 4 |
| 3.2 | 12 |

Although the information can be passed to the resource allocator 121 in the form of a table, or data it could also be passed in the form of a program. The resource allocator 121 can execute programs. As such, the compiler could compile a simple program which instructs the resource allocator how to calculate the number of registers on the basis of one or more constants. This program can then be executed by the resource allocator which then allocates the calculated number of registers. This arrangement is particularly useful for complex scenarios with nested conditional sections.

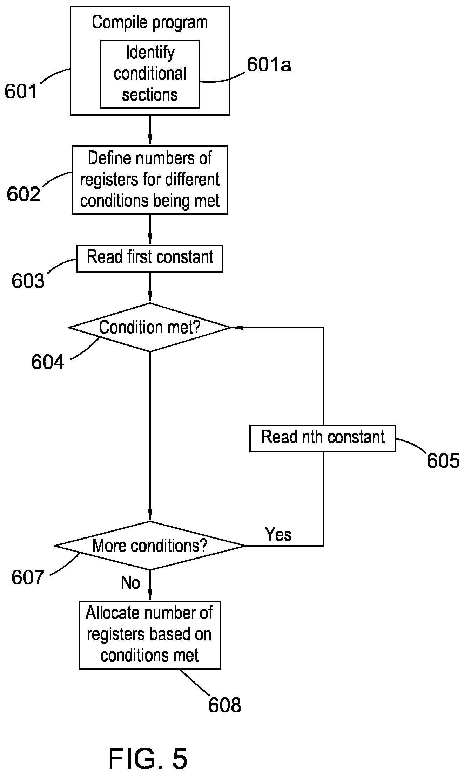

Figure 5 depicts an embodiment for compiling a program with a plurality of conditional sections. The program is compiled 601 and the conditional sections identified 601a. At step 602 the number of registers for different conditions being met are defined. This could be by defining the additional registers required for each condition being met (table 1) or the total number of registers for the different conditions (table 2).

The resource allocator then reads the first constant 603 and determines whether a condition is met at step 604. Whether there are further conditions is determined at step 607. If there are further conditions then the next constant is read at step 605 and a condition evaluated at step 604. This is repeated until all the constants have been read and the respective conditions are evaluated.

Once all the conditions have been evaluated the number of registers is allocated 608 based on the conditions met. Similarly to the arrangement depicted in Figure 5, constants retrieved by the resource allocator 121 can be stored in the allocated registers to expedite the retrieval and reading of the constants by the shader execution unit 122 when executing the shader program.

In this way, the correct number of registers can be allocated to a shader program with a plurality of conditional sections.

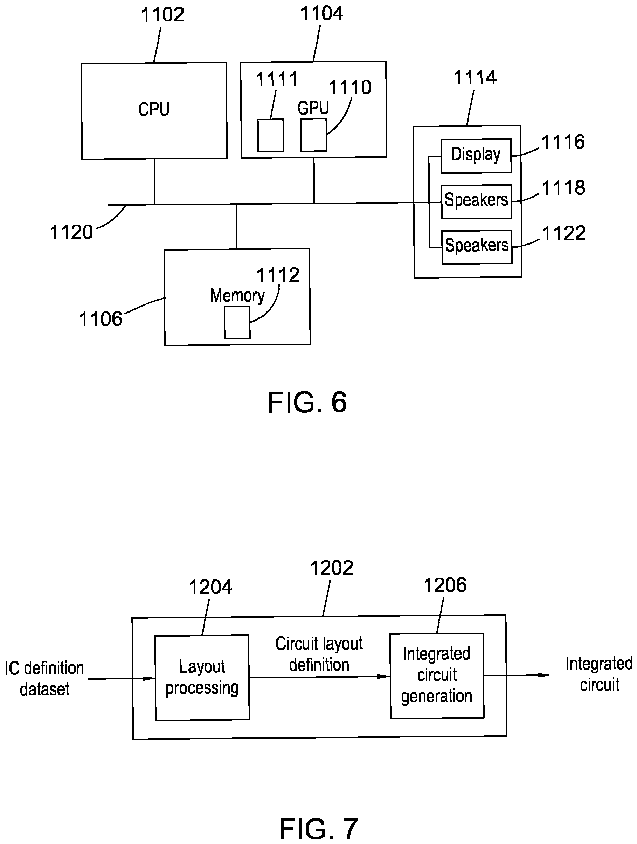

Figure 6 shows a computer system in which the graphics processing systems described herein may be implemented. The computer system comprises a CPU 1102, a GPU 1104, a memory 1106, a neural network accelerator (NNA) 1108 and other devices 1114, such as a display 1116, speakers 1118 and a camera 1122. Processing blocks 1110 and 1111 (corresponding to processing blocks 104 and 106) are implemented on the GPU 1104. In other examples, one or more of the depicted components may be omitted from the system, and/or the processing block 1110 may be implemented on the CPU 1102 or within the NNA 1108. The components of the computer system can communicate with each other via a communications bus 1120. A store 1112 (corresponding to memory 102) is implemented as part of the memory 1106.

The graphics processing system of Figure 1 is shown as comprising a number of functional blocks. This is schematic only and is not intended to define a strict division between different logic elements of such entities. Each functional block may be provided in any suitable manner. It is to be understood that intermediate values described herein as being formed by a graphics processing system need not be physically generated by the graphics processing system at any point and may merely represent logical values which conveniently describe the processing performed by the graphics processing system between its input and output.

The graphics processing systems described herein may be embodied in hardware on an integrated circuit. The graphics processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a graphics processing system configured to perform any of the methods described herein, or to manufacture a graphics processing system comprising any apparatus described herein. An integrated circuit definition dataset may be, for example, an integrated circuit description.

Therefore, there may be provided a method of manufacturing, at an integrated circuit manufacturing system, a graphics processing system as described herein. Furthermore, there may be provided an integrated circuit definition dataset that, when processed in an integrated circuit manufacturing system, causes the method of manufacturing a graphics processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a graphics processing system will now be described with respect to Figure 7.

Figure 7 shows an example of an integrated circuit (IC) manufacturing system 1202 which is configured to manufacture a graphics processing system as described in any of the examples herein. In particular, the IC manufacturing system 1202 comprises a layout processing system 1204 and an integrated circuit generation system 1206. The IC manufacturing system 1202 is configured to receive an IC definition dataset (e.g. defining a graphics processing system as described in any of the examples herein), process the IC definition dataset, and generate an IC according to the IC definition dataset (e.g. which embodies a graphics processing system as described in any of the examples herein). The processing of the IC definition dataset configures the IC manufacturing system 1202 to manufacture an integrated circuit embodying a graphics processing system as described in any of the examples herein.

The layout processing system 1204 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1204 has determined the circuit layout it may output a circuit layout definition to the IC generation system 1206. A circuit layout definition may be, for example, a circuit layout description.

The IC generation system 1206 generates an IC according to the circuit layout definition, as is known in the art. For example, the IC generation system 1206 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1206 may be in the form of computer-readable code which the IC generation system 1206 can use to form a suitable mask for use in generating an IC.

The different processes performed by the IC manufacturing system 1202 may be implemented all in one location, e.g. by one party. Alternatively, the IC manufacturing system 1202 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a graphics processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 9 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 10, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of executing a shader program in a graphics processing system, the shader program having a conditional section applied only in response to fulfilment of a condition, the method comprising:
compiling the program (401), by a compiler, the compiling comprising identifying (401a) the conditional section;
reading (403), by a resource allocator, a constant which determines the result of the condition;
determining (404), by the resource allocator, whether the condition is met or not met;
allocating (405, 406), by the resource allocator, based on the determination, a number of registers.

2. A method according to any one of the preceding claims the method further comprises storing (501), by the resource allocator, the constant in one of the allocated registers.

3. A method according to claim 2 further comprising:
Reading (502), by a processor, the constant stored in the register;
Determining (503), by the processor whether the condition is met;
responsive to the determination executing (504) the conditional section or not executing the conditional section.

4. A method according to any one of the preceding claims further comprising transmitting, by the compiler to the resource allocator, the first number of registers, the second number of registers and the condition.

5. A method according to any one of the preceding claims wherein allocating comprises either allocating a first number of registers or a second number of registers according to whether it is determined the condition is met or not met.

6. A method according to any one of the preceding claims further comprising defining (402), by the compiler, a first number of registers to be allocated if the condition is met and a second number of registers to be allocated if the condition is not met and wherein allocating comprises allocating either the first number of registers or the second number of registers.

7. A method according to any one of the preceding claims wherein the shader program has a plurality of conditional sections, each section being applied only in response to fulfilment of a condition, wherein:
compiling comprises identifying (601a) the plurality of conditional sections;
reading comprises reading (603, 605) the plurality of constants on which the conditions are based;
determining comprises determining (604) whether each of the plurality of conditions is met or not met; and
allocating comprises allocating (608) a number of registers based on the determination.

8. A method according to claim 7 further comprising defining a plurality of number of registers, a different number of registers for each combination of conditions fulfilled and allocating comprises allocating one of the plurality of registers.

9. A graphics processing system configured to execute a shader program, wherein the graphics processing system comprises logic configured to:
compile the program, by a compiler, the compiling comprising identifying a conditional section;
read, by a resource allocator, a constant which determines the result of the condition;
determine, by the resource allocator, whether the conditional statement is met or not met;
allocate, by the resource allocator, based on the determination, a number of registers.

10. A graphics processing system according to claim 8 wherein allocating comprises either allocating a first number of registers or a second number of registers according to whether it is determined the condition is met or not met.

11. A graphics processing system configured to perform the method of any of claims 1 to 8.

12. A graphics processing system according to any one of claims 9 to 11 comprising:
a CPU configured to compile the shader program; and
a GPU configured to compute the number of registers needed.

13. The graphics processing system of any one of claims 9 to 12 wherein the graphics processing system is embodied in hardware on an integrated circuit.

14. Computer readable code configured to cause the method of any of claims 1 to 8 to be performed when the code is run.

15. A computer readable storage medium having encoded thereon the computer readable code of claim 14.
